# EUROPÄISCHE PATENTANMELDUNG

(11) **EP 2 793 365 A1**
(43) Veröffentlichungstag der Anmeldung: **22.10.2014**
(21) Anmeldenummer: 13163936.1
(22) Anmeldetag: 16.04.2013
(51) Int. Cl.: H02K 1/27, H02K 15/03

(54) **Einzelsegmentläufer mit durch Biegeträger gehaltenen Einzelsegmenten und Herstellungsverfahren**

(71) Anmelder: Siemens Aktiengesellschaft, 80333 München (DE)
(72) Erfinder: Schneider, Helmut, 97688 Bad Kissingen (DE); Stäblein, Armin, 97650 Fladungen (DE); Volkmuth, Benjamin, 97717 Sulzthal (DE); Müller, Jörg, 97720 Nüdlingen (DE)

(57) **Zusammenfassung**

Es soll ein Einzelsegmentläufer bereitgestellt werden, dessen Aufbau einen geringen Herstellungsaufwand erfordert. Hierzu wird ein Einzelsegmentläufer mit einer Drehachse und mehreren Blechpaketsegmenten (5), die um die Drehachse angeordnet sind, bereitgestellt. Jedes Blechpaketsegment (5) ist an einem separaten Biegeträger (11) radial befestigt. Alle Biegeträger (11) sind durch mindestens einen Fixierring (14) radial gehalten.

## Beschreibung

Die vorliegende Erfindung betrifft einen Einzelsegmentläufer mit einer Drehachse und mehreren Blechpaketsegmenten, die um die Drehachse angeordnet sind. Darüber hinaus betrifft die vorliegende Erfindung ein Verfahren zum Herstellen eines Einzelsegmentläufers durch Anordnen mehrerer Blechpaketsegmente um eine Drehachse.

Einzelsegmentläufer für Elektromotoren mit Flusskonzentration zeichnen sich dadurch aus, dass der Läufer sternförmig mit Permanentmagneten bestückt ist, die Permanentmagnete in Bewegungsrichtung gepolt sind und der Zwischenraum zwischen den einzelnen Permanentmagneten jeweils durch ein ferromagnetisches Segment gefüllt ist. Ein solches Einzelsegment wird üblicherweise als Blechpaket gefertigt und kann daher als Blechpaketsegment bezeichnet werden. Die einzelnen Blechpaketsegmente sind, wenn möglich, nicht miteinander verbunden, um Streuungen zu vermeiden.

Der Aufbau und die Fertigung eines Elektromotors mit Magneten in Flusskonzentration bedarf spezieller Techniken: Insbesondere sollte der Aufbau streuungsarm und für eine Serienproduktion geeignet sein. Da ein streuungsarmer Aufbau in der Regel die Verwendung von Blecheinzelsegmenten, d.h. Blechpaketsegmenten erfordert, und so einen erhöhten Fertigungsaufwand mit sich führt, konkurriert ein solcher Aufbau mit einem Serienfertigungsprozess. Bisherige Ausführungen entsprechender Rotoren sind ein Kompromiss zwischen Rotorsegmenteinzelblechen einerseits und Rotorblechen andererseits, bei denen die Einzelbleche miteinander verbunden sind. Mit kompletten Rotorblechen wird erreicht, dass das Rotorblechpaket mechanisch stabiler und einfacher herstellbar wird, aber ein Teil des Flusses der Magnete kurzgeschlossen wird. Möglich wird dies z.B. durch stanzpaketierte Läuferpakete, bei denen in definierten Abständen die inneren Unterbrechungsstege erhalten bleiben. Einzelsegmente, wie sie beispielsweise in der nachveröffentlichten europäischen Patentanmeldung EP 12 159 917.9 beschrieben sind, bieten den Vorteil, dass es zu keinem Kurzschluss kommt.

Darüber hinaus sollte bei einem Einzelsegmentläufer mit Flusskonzentration das Rotorblech durch "amagnetisches" Material (Permeabilitätszahl µᵣ < 5) zwischen jedem Pol getrennt aufgebaut werden. Dies führt zu einer hohen Anzahl von Einzelsegmenten, die zusammengefügt werden müssen. Weiterhin müssen Probleme hinsichtlich des Positionierens und Haltens der Magnete und Blechpaketsegmente sowie der Momentenübertragung überwunden werden.

Die Aufgabe der vorliegenden Erfindung besteht somit darin, einen Einzelsegmentläufer für eine elektrische Maschine vorzuschlagen, dessen Einzelsegmente bei geringem Montageaufwand stabil am Läufer gehalten werden.

Erfindungsgemäß wird diese Aufgabe gelöst durch einen Einzelsegmentläufer mit
- einer Drehachse und
- mehreren Blechpaketsegmenten, die um die Drehachse angeordnet sind,
   wobei
- jedes Blechpaketsegment jeweils an einem separaten Biegeträger radial befestigt ist und
- alle Biegeträger durch mindestens einen Fixierring radial gehalten sind.

Darüber hinaus wird erfindungsgemäß bereitgestellt ein Verfahren zum Herstellen eines Einzelsegmentläufers durch
- Anordnen mehrerer Blechpaketsegmente um eine Drehachse
- radiales Befestigen jedes Blechpaketsegments jeweils an einem separaten Biegeträger und
- Fixieren aller Biegeträger durch mindestens einen Fixierring in radialer Richtung.

In vorteilhafter Weise werden also die Blechpaketsegmente, d.h. die Einzelsegmente durch Biegeträger gehalten, welche ihrerseits durch einen Fixierring zueinander fixiert werden. Mit den Biegeträgern können also Elemente verwendet werden, die hinsichtlich der Fixierung optimiert sind. Die Biegeträger sind dabei vorzugsweise so anzuordnen, dass sie den magnetischen Fluss in den Blechpaketsegmenten nicht oder kaum beeinflussen.

Vorzugsweise sind alle Biegeträger streifenförmig ausgebildet und jeder Biegeträger ragt aus beiden Stirnseiten des jeweiligen Blechpaketsegments heraus. Mit der Streifenform und entsprechender radialer Ausrichtung kann eine hohe radiale Steifigkeit erzielt werden. Wenn die Biegeträger aus den Stirnseiten herausragen, können sie dort an den oder die Fixierringe angreifen.

In einer Ausführungsform kann der Fixierring die Biegeträger radial nach innen drücken. Dadurch werden die an ihnen befestigten Blechpaketsegmente auf eine im Zentrum angeordnete Hülse oder Welle gedrückt, wodurch sie stabilisiert werden.

Alternativ kann der Fixierring die Biegeträger auch radial nach außen drücken. Dies setzt allerdings voraus, dass die Blechpaketsegmente anderweitig gegen eine Bewegung radial nach außen gehalten werden. Durch die Vorspannung des Fixierrings gegenüber den Biegeträgern wird der Einzelsegmentläufer wiederum stabilisiert.

Der Fixierring kann als Endscheibe ausgebildet sein und die Biegeträger gegen jede Bewegung senkrecht zur Drehachse sichern. Dies ist beispielsweise dadurch möglich, dass die Biegeträger stoff-, kraft- oder formschlüssig in der Endscheibe gehalten werden. Somit sind die Blechpaketsegmente zuverlässig in alle Richtungen senkrecht zur Drehachse fixiert.

Vorzugsweise befinden sich an beiden Stirnseiten des Einzelsegmentläufers derartige Endscheiben. Damit werden die Blechpaketsegmente an beiden Stirnseiten zuverlässig fixiert. Durch diesen symmetrischen Aufbau lässt sich der Einzelsegmentläufer modular einfach axial verlängern.

In einer Ausgestaltung können alle Biegeträger in den jeweiligen Blechpaketsegmenten formschlüssig befestig sein. Dadurch können hohe Kräfte von den Biegeträgern auf die Blechpaketsegmente übertragen werden.

Alternativ können alle Biegeträger in den jeweiligen Blechpaketsegmenten aber auch kraft- oder stoffschlüssig befestigt sein. So können die Biegeträger beispielsweise in den Blechpaketsegmenten eingeklebt sein. Dies hat unter Umständen Fertigungsvorteile.

Außerdem können alle Blechpaketsegmente formschlüssig in Umfangsrichtung an einer Hülse, deren Permeabilitätszahl unter 5 liegt, gehalten sein. Dieser Formschluss in Umfangsrichtung hat den Vorteil, dass höhere Drehmomente von der Hülse auf die Blechpaketsegmente übertragen werden können. Unabhängig davon ist es günstig, wenn die Hülse "amagnetisch" ist, d.h. ihre Permeabilitätszahl unter 5 liegt. Dadurch werden magnetische Streuungen, die den Wirkungsgrad herabsetzen, vermieden.

Alle Blechpaketsegmente können auch formschlüssig in radialer Richtung an einer Hülse, deren Permeabilitätszahl unter 5 liegt, gehalten sein. Dies hat den Vorteil, dass die Hülse die Zentrifugalkräfte der Blechpaketsegmente aufnehmen kann. Unabhängig davon ist es wieder günstig, wenn die Hülse amagnetisch ist.

Die vorliegende Erfindung wird nun anhand der beigefügten Zeichnungen näher erläutert, in denen zeigen:
- FIG 1: eine Stirnseitenansicht einer Welle;
- FIG 2: die Welle von FIG 1 mit Hülse;
- FIG 3: eine Stirnseitenansicht eines Blechpaketsegments;
- FIG 4: eine Stirnseitenansicht der Welle mit Hülse gemäß FIG 2 und aufgesteckten Läufereinzelsegmenten gemäß FIG 3;
- FIG 5: die Anordnung von FIG 4 mit eingefügten Magneten;
- FIG 6: die Anordnung von FIG 5 mit gefügtem Spannring;
- FIG 7: eine alternative Ausführungsform mit gefügtem Druckring;
- FIG 8: einen Einzelsegmentläufer gemäß FIG 7 in 3D-Ansicht;
- FIG 9: einen Einzelsegmentläufer gemäß FIG 6 in 3D-Ansicht;
- FIG 10: den Einzelsegmentläufer von FIG 9 in einer um 90° gedrehten Ansicht;
- FIG 11: eine 3D-Ansicht eines Läufereinzelsegments einer weiteren Ausführungsform;
- FIG 12: das Läufereinzelsegment mit eingefügtem Biegeträger;
- FIG 13: eine Stirnseitenansicht des Läufereinzelsegments von FIG 12;
- FIG 14: eine Stirnseitenansicht eines alternativen Läufereinzelsegments;
- FIG 15: eine 3D-Ansicht einer Welle;
- FIG 16: die Welle von FIG 15 mit montierter Endscheibe;
- FIG 17: die Anordnung von FIG 16 mit vormontierten Läufereinzelsegmenten gemäß FIG 12; und
- FIG 18: den fertigmontierten Einzelsegmentläufer auf der Basis der Anordnung von FIG 17 mit montierten Magneten und montierter zweiter Endscheibe.

Die nachfolgend näher geschilderten Ausführungsbeispiele stellen bevorzugte Ausführungsformen der vorliegenden Erfindung dar.

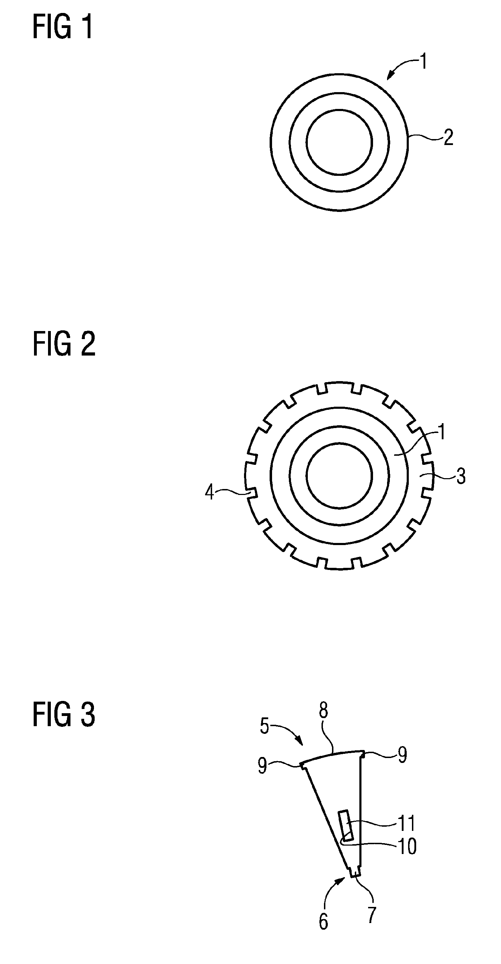

FIG 1 zeigt eine Stirnseitenansicht einer Welle 1. Sie besitzt eine Schulter 2, die als Anschlag für eine zu montierende Hülse 3 dient (vgl. FIG 2). Die Hülse 3 ist "amagnetisch", d.h. ihre Permeabilitätszahl liegt unter 5, vorzugsweise unter 1,5. Die Hülse 3 besitzt hier an ihrem Außenumfang axial verlaufende Nuten 4.

Die amagnetische Hülse 3 dient dazu, die später gefügten Blechpaketsegmente magnetisch zu isolieren. Durch die Nuten 4 können die später eingesetzten Blechpaketsegmente positioniert werden und zudem dienen sie der Drehmomentübertragung. Alternativ kann auch eine amagnetische Vollwelle verwendet werden.

FIG 3 gibt ein Blechpaketsegment 5 in der Stirnseitenansicht, d.h. einer Ansicht in axialer Richtung, wieder. Das Blechpaketsegment 5 ist aus einem Stapel gleichgeformter Einzelbleche gebildet. Der Querschnitt des Blechpaketsegments 5 besitzt daher die Gestalt eines darin verbauten Einzelblechs. Im Wesentlichen ist der Querschnitt hier dreieckförmig. Eine Spitze 6 des dreieckförmigen Blechpaketsegments 5 weist im fertig montierten Zustand des Einzelsegmentläufers zu seiner Drehachse und ist hier mit einer Feder 7 ausgestattet.

An der schmalen Außenseite 8 besitzt das Blechpaketsegment 5 an beiden Kanten jeweils eine Schulter 9.

In einem Abschnitt, der näher an der Spitze 6 als an der Außenseite 8 liegt, ist eine Aussparung 10 vorgesehen. Sie besitzt im vorliegenden Beispiel einen rechteckförmigen Querschnitt und erstreckt sich entlang der Symmetrieachse des Blechpaketsegments 5. Die Hauptausdehnungsrichtung der Aussparung 10 erstreckt sich entlang dieser Symmetrieachse bzw. Symmetrieebene und sie verläuft im fertig montierten Zustand des Einzelsegmentläufers in radialer Richtung.

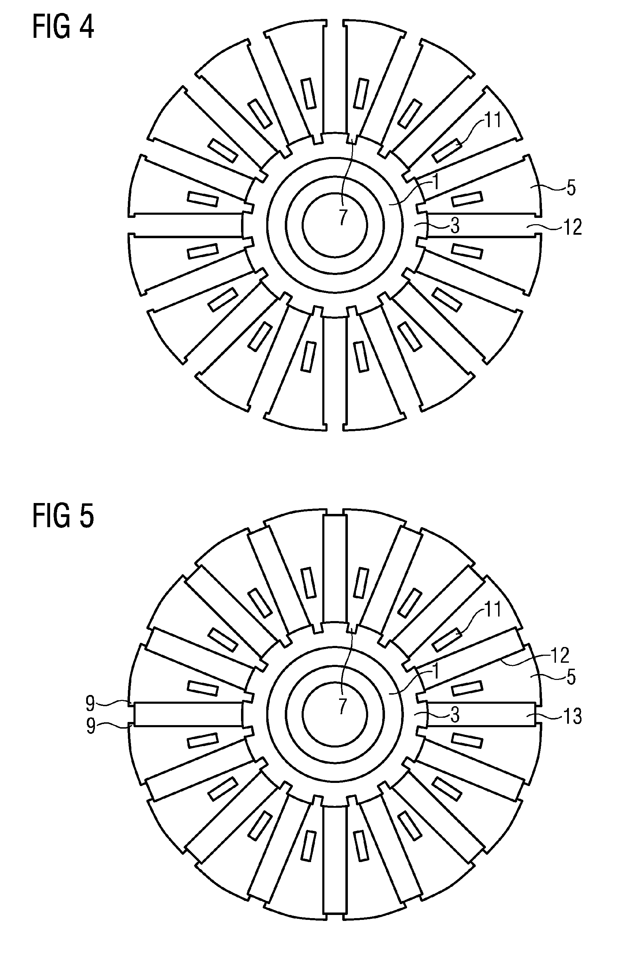

In die Aussparung 10 ist hier ein streifen- bzw. bandförmiger Biegeträger 11 eingefügt. Er füllt die Aussparung 10 im Wesentlichen vollständig aus. Für einen Einzelsegmentläufer werden gemäß FIG 2 die Welle 1 mit Hülse 3 und gemäß FIG 3 zahlreiche Blechpaketsegmente 5 mit Biegeträger 11 vormontiert. Auf die vormontierte Welle 1 mit Hülse 3 werden gemäß FIG 4 die vorgefügten Blechpaketsegmente 5 sternförmig aufgesteckt. Im vorliegenden Beispiel besitzt der Einzelsegmentläufer sechzehn Blechpaketsegmente 5. Diese Anzahl kann natürlich auch von sechzehn verschieden sein.

Die Blechpaketsegmente 5 sind voneinander beabstandet. Zwischen jeweils zwei benachbarten Blechpaketsegmenten 5 ergibt sich eine im Querschnitt rechteckförmige Magnettasche 12. Dadurch, dass die Blechpaketsegmente 5 in der amagnetischen Hülse 3 stecken, sind die einzelnen Blechpaketsegmente 5 voneinander magnetisch isoliert, auch wenn sie mechanisch miteinander verbunden sind.

Alle Blechpaketsegmente 5 stecken mit ihren Federn 7 in den Nuten 4 der Hülse 3. Über diesen Formschluss in Umfangsrichtung zwischen den Blechpaketsegmenten 5 und der amagnetischen Hülse 3 kann ein hohes Drehmoment übertragen werden.

In einem nachfolgenden Fertigungsschritt werden gemäß FIG 5 Magnete 13 in die Magnettaschen 12 eingefügt. Die Permanentmagnete 13 besitzen die gleiche axiale Baulänge wie die Blechpaketsegmente 5. Außerdem sind die Permanentmagnete 13 in Umfangsrichtung polarisiert und der magnetische Fluss wird jeweils durch die Blechpaketsegmente 5 in radiale Richtung gemäß dem Flusskonzentrationsprinzip umgelenkt.

Dadurch, dass die Magnettaschen an ihrer Außenseite die Schultern 9 aufweisen, sind die Magnettaschen 12 außen verjüngt, sodass die Permanentmagnete 13 formschlüssig in den Magnettaschen 12 gehalten werden. Die anderen Seiten der Magnettaschen 12 bilden die jeweils benachbarten Blechpaketsegmente 5 in Umfangsrichtung und ein Abschnitt der Hülse 3 radial innen.

Die in die Aussparungen 10 der Blechpaketsegmente 5 eingefügten Biegeträger 11 sind in axialer Richtung etwas länger als die Blechpaketsegmente 5. Sie ragen daher mindestens aus einer Stirnseite der Anordnung von FIG 5, vorzugsweise aus beiden Stirnseiten. Da die Blechpaketsegmente 5 bislang noch keinen radialen Halt nach außen besitzen, wird ein Spannring 14 an einer Stirnseite der Anordnung von FIG 5 außen um alle Biegeträger 11 gefügt. Der Spannring 14 stellt also für die Biegeträger 11 einen Fixierring dar. Er verhindert, dass die Biegeträger 11 radial nach außen bewegt werden können. Außerdem drückt er mit einer entsprechenden Vorspannung die Biegeträger 11 hin zur Drehachse der Welle 1. Damit drückt er auch alle Blechpaketsegmente 5 in radialer Richtung auf die Hülse 3. Vorzugsweise wird auch auf der gegenüberliegenden Stirnseite der Anordnung von FIG 5 ein gleicher Spannring 14 aufgebracht.

Bei der Fertigung werden die Spannringe 14 erwärmt und über die Biegeträger 11, welche beidseitig über das Blechpaket stehen, gezogen. Während des Abkühlens ziehen sich die Spannringe 14 zusammen und fixieren so den Läufer in radialer Richtung. Des Weiteren sichern sie indirekt über die Blechpaketsegmente 5 und deren Schultern 9 die Magnete in radialer Richtung. Außerdem sichern die Fixierringe 14 die Magnete auch in axialer Richtung. Alternativ können die Spannringe durch einen Bajonettverschluss verspannt werden. Zusätzlich oder alternativ können die Spannringe 14 form- und/oder stoffschlüssig mit den Biegeträgern 11 verbunden werden.

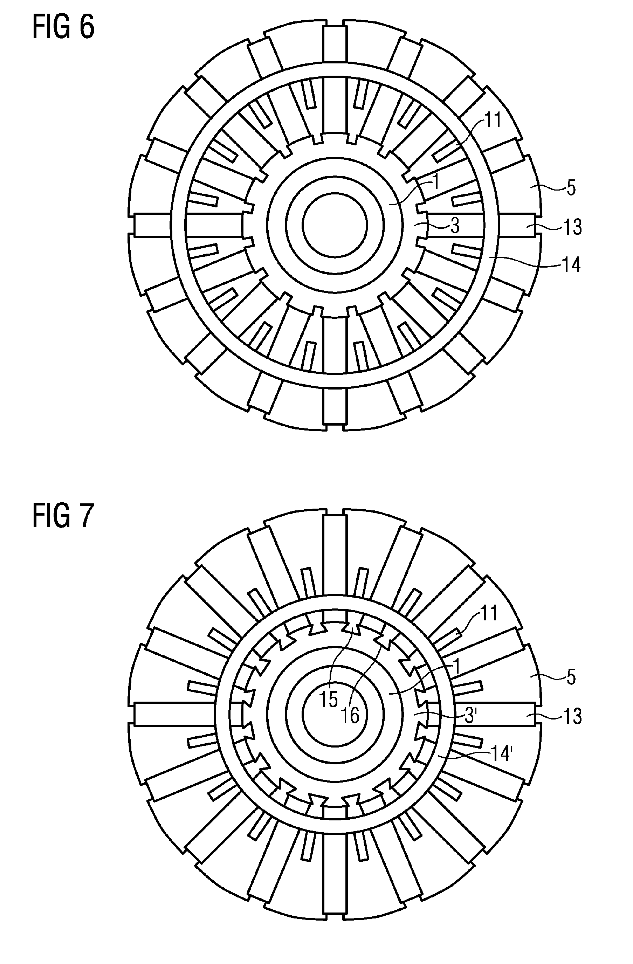

FIG 7 zeigt eine alternative Ausführungsform zu dem Beispiel von FIG 6. Der Aufbau des Einzelsegmentläufers entspricht im Wesentlichen demjenigen von FIG 6. Anstelle des Spannrings 14 wird hier ein Druckring 14' an die Innenseiten der Biegeträger 11 gefügt. Die radiale Fixierung und Positionierung der Blechpaketsegmente wird über einen radial wirkenden Formschluss zwischen dem jeweiligen Blechpaketsegment 5 und einer entsprechend gestalteten Hülse 3' bzw. der Welle 1 realisiert. Dazu dient beispielsweise eine Schwalbenschwanzverbindung zwischen Blechpaketsegment 5 und amagnetischer Hülse 3'. Speziell kann ein Blechpaketsegment 5 hierzu einen Schwalbenschwanz 15 aufweisen, welcher axial in einer korrespondierenden Schwalbenschwanznut 16 geführt wird. Über diesen Formschluss wird zudem das Drehmoment übertragen.

Der unter die Biegeträger 11 gespannte Druckring 14' stellt hier als Fixierring sicher, dass die Fügeflächen der Blechpaketsegmente 5 und der Hülse 3' definiert anliegen und so den gewünschten Außendurchmesser des Läufers abbilden. Des Weiteren fixieren diese an beiden Stirnseiten sitzenden Druckringe 14' die Magnete in axialer Richtung.

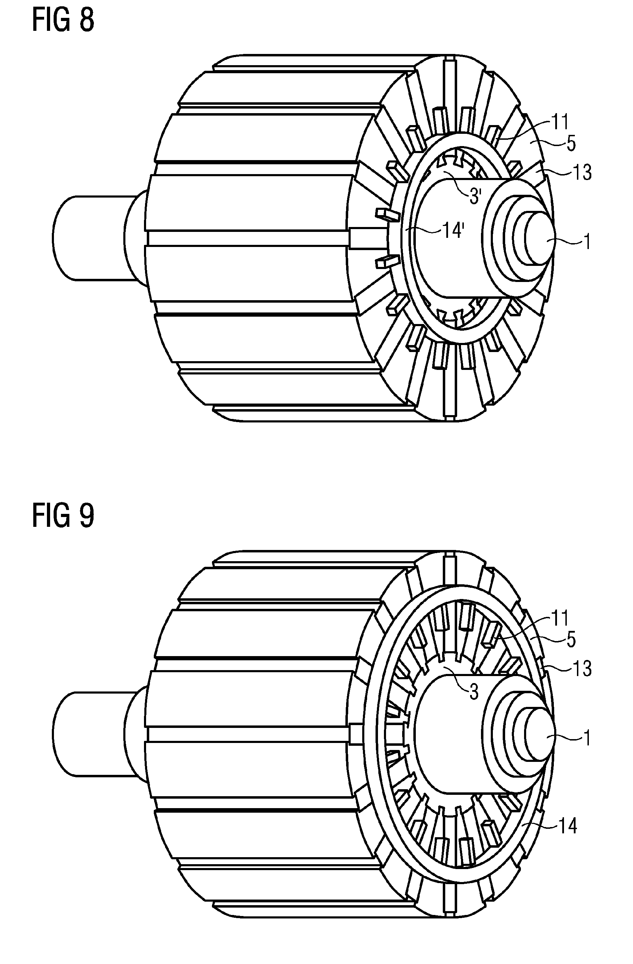

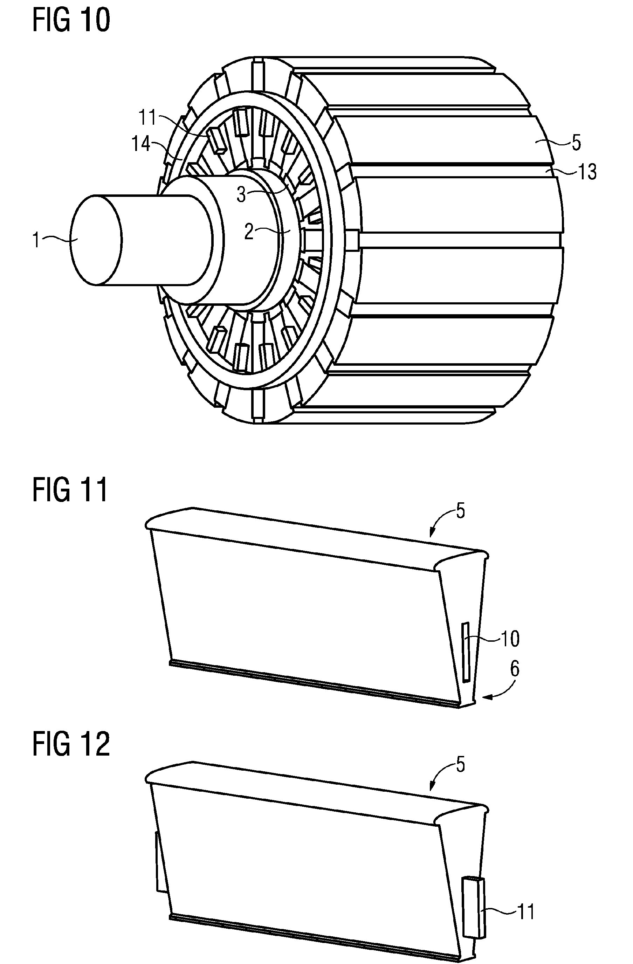

FIG 8 zeigt den Einzelsegmentläufer von FIG 7 in 3D-Ansicht. Speziell ist hier zu erkennen, wie die Biegeträger 11 an der Stirnseite des Blechpakets bzw. der Blechpaketsegmente 5 herausragen. Radial unterhalb der herausragenden Abschnitte der Biegeträger 11 sitzt der als Fixierring dienende Druckring 14'. In FIG 9 ist der Einzelsegmentläufer von FIG 6 in einer 3D-Ansicht dargestellt. Hier ist deutlich zu erkennen, dass die überstehenden Abschnitte der Biegeträger 11 von dem Spannring 14 umfasst werden. Die um 90° gedrehte Ansicht von FIG 10 zeigt außerdem den gleichen Spannring auf der gegenüberliegenden Stirnseite des Einzelsegmentläufers. Außerdem ist hier zu erkennen, wie die Schulter 2 der Welle 1 als axialer Anschlag für die Hülse 3 dient.

Die oben geschilderten Einzelsegmentläufer haben zahlreiche Vorteile. Insbesondere kann für die Welle ein bekannter Serienwerkstoff verwendet werden. Nur für die Hülse 3, 3' muss ein entsprechender amagnetischer, gegebenenfalls teurerer Werkstoff verwendet werden. Vorteilhaft ist außerdem, dass die Positionierungs- und Fügekonturen auf Hülse und Blechpaketsegmenten das Drehmoment übertragen und außerdem die Montage erleichtern sowie einen geringen Luftspalt ermöglichen.

Ein besonderer Vorteil des geschilderten Aufbaus liegt außerdem darin, dass die Läufereinzelsegmente bereits gefügt bezogen werden können, wodurch sich eine Verringerung der Fertigungstiefe ergibt. Außerdem sind sie einfach mit bekannten Technologien herzustellen und ermöglichen einen streuungsarmen Aufbau. Durch die Positionierung der Magnete direkt im Blech werden zudem keine weiteren Bauteile benötigt. Günstigerweise stabilisiert der Zugring den Rotor, fixiert die Magnete in axialer Richtung und verhindert ein radiales Abheben der Einzelsegmente, wie erwähnt. Ebenso stabilisiert der Druckring den Rotor, fixiert die Magnete in axialer Richtung und schafft eine definierte Anschlagfläche von Blechpaketsegment und Hülse zur Erreichung eines festen Außendurchmessers bzw. geringen Luftspalts.

Durch den Einsatz von Zwischenscheiben kann die Paketdurchbiegung verringert werden. Dies ermöglicht eine Variation der Baulänge. Gemäß einer anderen Weiterbildung lassen sich etwaige Luftspalte zwischen Magnet und Blechpaket durch Tränken beispielsweise mit einem flüssigen Harz ausfüllen. Diese Luftspalte könnten andernfalls zu Bewegungen des Magneten führen, die diesen beschädigen bzw. zerstören könnten.

In Zusammenhang mit den Figuren 11 bis 18 wird nun ein weiteres Ausführungsbeispiel der vorliegenden Erfindung erläutert. FIG 11 zeigt eine 3D-Ansicht eines Läufereinzelsegments bzw. Blechpaketsegments 5. Es besitzt im Wesentlichen die bereits in Zusammenhang mit FIG 3 beschriebene Gestalt. Der Fuß 6 des Blechpaketsegments 5, der im fertigmontierten Zustand des Einzelsegmentläufers zum Zentrum bzw. zur Welle 1 weist, kann hier anders gestaltet werden, da die Drehmomentenübertragung anders erfolgt. Insbesondere kann auf die Feder 7 (vgl. FIG 3) verzichtet werden.

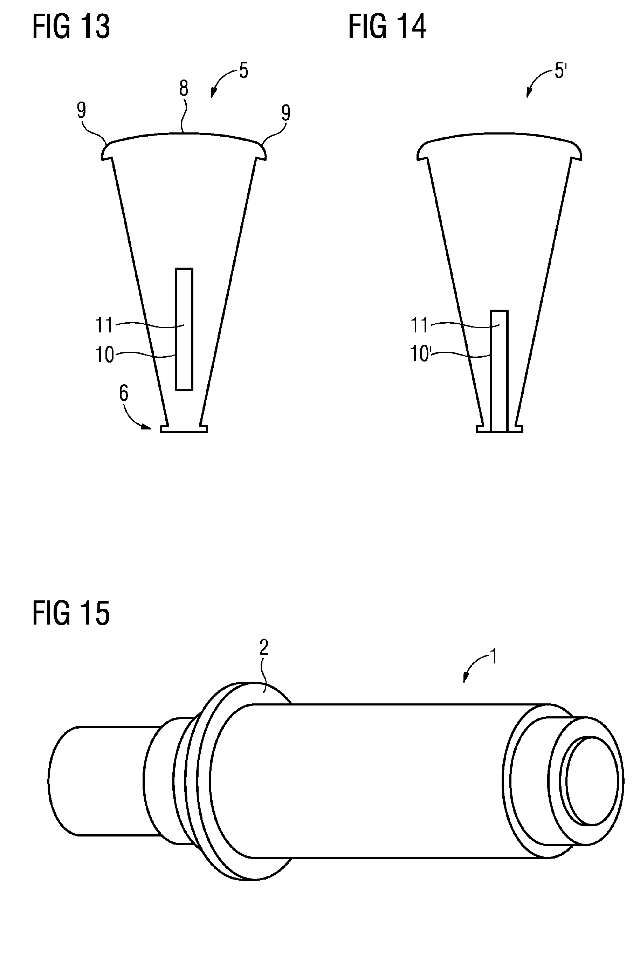

In die Aussparung 10 des Blechpaketsegments 5 wird auch hier ein bandförmiger Biegeträger 11 eingefügt. Der Biegeträger 11 ragt an beiden Stirnseiten aus dem Blechpaketsegment 5. im Querschnitt ergibt sich damit die Ansicht von FIG 13, die derjenigen von FIG 3 sehr ähnlich ist. Im vorliegenden Beispiel ist die Aussparung 10 vollständig von dem Blechmaterial des Blechpaketsegments 5 bzw. des jeweiligen Einzelblechs umgeben. Damit wird ein Formschluss zwischen dem Biegeträger 11 und dem Blechpaketsegment 5 erzielt.

Alternativ kann der Biegeträger 11 in einem Blechpaketsegment 5' gemäß FIG 14 auch durch Stoffschluss gehalten sein. In diesem Fall ist die Aussparung 10' nach unten, d.h. zur Welle bzw. Achse hin offen. Der Biegeträger 11 wird bei der Vormontage in diesem Fall in die offene Aussparung 10' eingeklebt oder anderweitig stoffschlüssig verbunden.

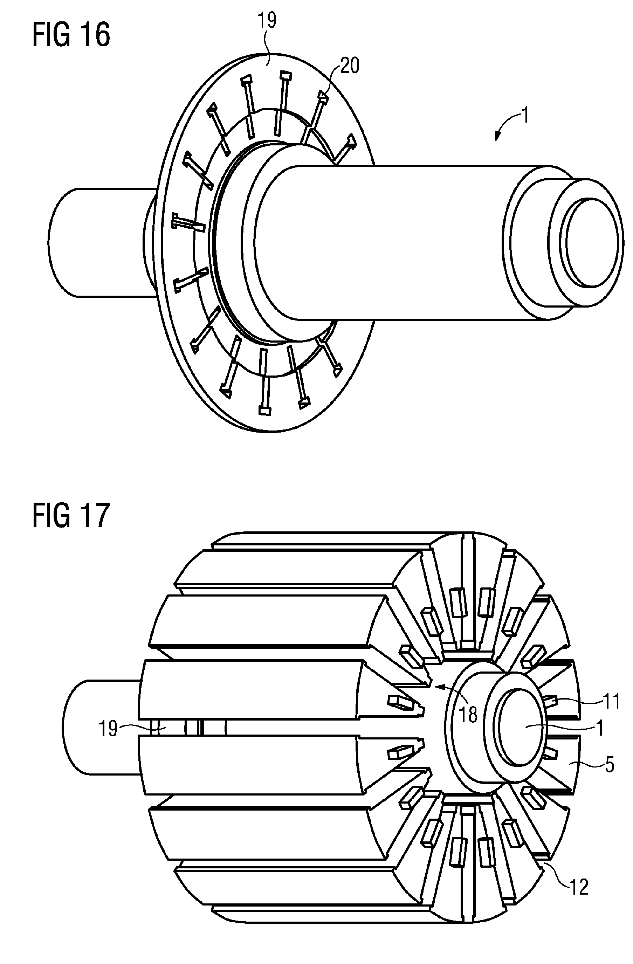

FIG 15 zeigt nun eine Welle 1 in 3D-Ansicht. Die Schulter 2 dient auch hier als axialer Anschlag. Gemäß FIG 16 wird auf die Welle 1 eine Endscheibe 15 als Fixierung montiert. Die Endscheibe 15 besitzt schlitzförmige Aussparungen 16 die jeweils in radialer Richtung verlaufen und somit sternförmig angeordnet sind.

Zur Fertigung des Einzelsegmentläufers wurden zahlreiche Blechpaketsegmente 5 mit eingefügten Biegeträgern 11 gemäß FIG 12 oder dergleichen vormontiert. Diese vormontierten Läufereinzelsegmente (Blechpaketsegment 5 mit Biegeträger 11) werden nun radial um die Welle 1 gemäß FIG 17 angeordnet. Hierbei werden die überstehenden Abschnitte der Biegeträger 11 in die radial verlaufenden Schlitze 16 der Endscheibe 15 gesteckt. Die Blechpaketsegmente 5 sind hier von der Welle 1 beabstandet, sodass sich die Blechpaketsegmente 5 auch nicht mittelbar über eine Hülse berühren. Daher sind die Blechpaketsegmente gut voneinander magnetisch isoliert.

Der mechanische Halt der Blechpaketsegmente 5 erfolgt ausschließlich über die kraft-, form- bzw. stoffschlüssig eingebrachten Biegeträger 11, die ihrerseits formschlüssig an der amagnetischen Endscheibe 15 gehalten werden. Der Formschluss zwischen der Endscheibe 15 und den Biegeträgern 11 wirkt in alle Richtungen senkrecht zur Drehachse der Welle 1. Daher wird das Drehmoment von den Blechpaketsegmenten 5 über die Biegeträger 11 auf die Endscheibe 15 zur Welle 1 übertragen.

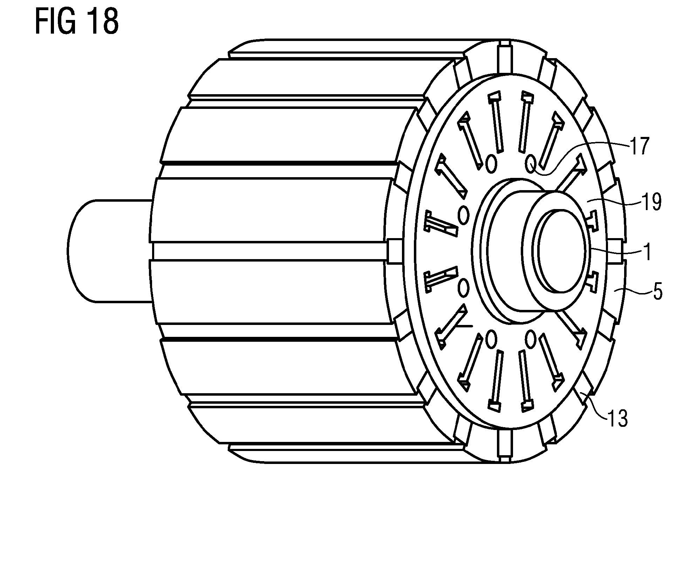

FIG 18 zeigt den Einzelsegmentläufer dieser Ausführungsform im fertigmontierten Zustand. Zum einen sind die Permanentmagnete 13 in die Magnettaschen 12 eingefügt. Sie besitzen die gleiche axiale Länge wie die Blechpaketsegmente 5. Zum anderen ist eine zweite Endscheibe 15 auf die bislang noch offene Stirnseite der Blechpaketsegmente bzw. des gesamten Blechpakets aufgesetzt. Diese zweite Endscheibe ist vorzugsweise gleich gebaut wie die erste Endscheibe auf der anderen Seite. Demzufolge besitzt sie auch radial verlaufende Schlitze, in die die aus den Blechpaketsegmenten 5 ragenden Abschnitte der Biegeträger 11 eingesteckt sind. Der Formschluss dieser Verbindung in alle Richtungen senkrecht zu der Drehachse der Welle 1 bewirkt wieder die gewünschte Festigkeit auch an dieser Seite des Einzelsegmentläufers und gewährleistet eine hohe Drehmomentenübertragung. Die als Fixierring gestaltete Endscheibe 15 ist wiederum amagnetisch um magnetische Streuungen zu vermeiden und hält die Blechpaketsegmente 5 auch in axialer Richtung.

Alternativ kann die zweite Endscheibe 15 zunächst durch eine Zwischenscheibe ersetzt werden, an die sich dann ein weiteres Paket anschließt. Dies kann bei großen Baulängen des Einzelsegmentläufers erforderlich werden, um die Durchbiegung der Pakete zu verringern.

Die im Zusammenhang mit den ersten Ausführungsbeispielen gemäß den Figuren 1 bis 10 aufgeführten Vorteile gelten im Wesentlichen auch bei diesem Ausführungsbeispiel gemäß den Figuren 11 bis 18. Ein zusätzlicher Vorteil bei der Nutzung von Endscheiben für die Drehmomentenübertragung besteht darin, dass die Endscheiben mit Löchern 17 versehen werden können, durch die hindurch Kühlmittel, insbesondere Kühlluft, in den Spalt 18 zwischen Welle 1 und Blechpaket gefördert werden kann. Hierdurch lassen sich die Kühleigenschaften des Rotors verbessern. Ein weiterer Effekt des Spalts 18 besteht darin, dass das Rotorgewicht und damit auch die Trägheit des Rotors verringert ist und außerdem ein streuungsarmer Aufbau realisiert werden kann.

## Patentansprüche

1. Einzelsegmentläufer mit
- einer Drehachse und
- mehreren Blechpaketsegmenten (5), die um die Drehachse angeordnet sind,
**dadurch gekennzeichnet, dass**
- jedes Blechpaketsegment (5) jeweils an einem separaten Biegeträger (11) radial befestigt ist und
- alle Biegeträger durch mindestens einen Fixierring (14, 14', 15) radial gehalten sind.

2. Einzelsegmentläufer nach Anspruch 1, wobei alle Biegeträger (11) streifenförmig ausgebildet sind, und jeder Biegeträger aus beiden Stirnseiten des jeweiligen Blechpaketsegments (5) herausragt.

3. Einzelsegmentläufer nach Anspruch 1 oder 2, wobei der Fixierring (14, 14', 15) die Biegeträger (11) radial nach innen drückt.

4. Einzelsegmentläufer nach Anspruch 1 oder 2, wobei der Fixierring (14, 14', 15) die Biegeträger (11) radial nach außen drückt.

5. Einzelsegmentläufer nach Anspruch 1 oder 2, wobei der Fixierring (14, 14', 15) als Endscheibe ausgebildet ist und die Biegeträger (11) gegen jede Bewegung senkrecht zur Drehachse sichert.

6. Einzelsegmentläufer nach Anspruch 5, wobei an beiden Stirnseiten des Einzelsegmentläufers eine derartige Endscheibe vorgesehen ist.

7. Einzelsegmentläufer nach einem der vorhergehenden Ansprüche, wobei alle Biegeträger (11) in den jeweiligen Blechpaketsegmenten (5) formschlüssig befestigt sind.

8. Einzelsegmentläufer nach einem der Ansprüche 1 bis 6, wobei alle Biegeträger (11) in den jeweiligen Blechpaketsegmenten stoffschlüssig befestigt sind.

9. Einzelsegmentläufer nach einem der vorhergehenden Ansprüche, wobei alle Blechpaketsegmente (5) formschlüssig in Umfangsrichtung an einer Hülse (3), deren Permeabilitätszahl unter 5 liegt, gehalten sind.

10. Einzelsegmentläufer nach einem der Ansprüche 1 bis 8, wobei alle Blechpaketsegmente (5) formschlüssig in radialer Richtung an einer Hülse (3), deren Permeabilitätszahl unter 5 liegt, gehalten sind.

11. Verfahren zum Herstellen eines Einzelsegmentläufers durch
- Anordnen mehrerer Blechpaketsegmente (5) um eine Drehachse **gekennzeichnet durch**
- radiales Befestigen jedes Blechpaketsegments (5) jeweils an einem separaten Biegeträger und
- Fixieren aller Biegeträger (11) **durch** mindestens einen Fixierring (14, 14', 15) in radialer Richtung.
